# EUROPEAN PATENT APPLICATION

(11) **EP 2 336 847 A1**
(43) Date of publication of application: **22.06.2011**
(21) Application number: 09290947.2
(22) Date of filing: 15.12.2009
(51) Int. Cl.: G06F 3/00

(54) **Device and method for virtualising a real object**

(71) Applicant: Alcatel Lucent, 75008 Paris (FR)
(72) Inventor: Lou, Zhe, 2000 Antwerp (BE); Trappeniers, Lieven, 2200 Herentals (BE)
(74) Representative: BiiP cvba

(57) **Abstract**

The present invention is related to a method for creating a virtual object (2) from a real object (1). The method comprises the steps of :
- obtaining information on at least one feature of the real object to be virtualised,
- interpreting and translating the information on the at least one feature, and
- building a three-dimensional virtual model of said real object using the interpreted and translated information.

The invention is further also related to a system for implementing the above method.

## Description

### Field of the Invention

The present invention generally relates to the field of virtual objects in a virtual world.

### Background of the Invention

Virtual worlds, e.g. Second Life, Wonderland, OpenCroque, Warcraft, etc. provide human-beings a place for their digital lives. By applying 3D technologies, this kind of virtual platforms creates a "realistic" environment similar to the world we live in. In those virtual worlds avatars (users) can make up themselves, design their own houses and furniture, make virtual friends, take virtual trip, etc.

For instance, user A has bought a new Nokia GSM and he wants to show it to his friend, user B, via a virtual world, so that user B can play with it as well, although he is not physically with user A. Sharing a real object via a virtual world creates added value as users can not only see the object, but also play with it. Several issues need to be solved in order to realize this application :
- How can a real object be translated into a virtual object inside a virtual world? We cannot imagine users to build a "realistic" 3D model of the real object by themselves. An easy and intuitive solution for that is needed.
- How can the translated virtual object be provided with the same/similar functionalities as its real life counterpart? In terms of GSM, can one make phone call with the translated virtual GSM?
- How can we make the translated virtual object to inherit the services that the real object owns?

Radio-frequency identification (RFlD) has become well known in the art nowadays and has plenty of applications. RFID is the use of an object (typically referred to as an RFID tag) applied to or incorporated into a product, animal, or person for the purpose of identification and tracking using radio waves. Some tags can be read from several meters away and beyond the line of sight of the reader. Most RFID tags contain at least two parts. One is an integrated circuit for storing and processing information, modulating and demodulating a radio-frequency (RF) signal, and other specialized functions. The second is an antenna for receiving and transmitting the signal.

Solutions for synchronizing between real events (turning a potentiometer) and virtual objects (a cube going up and down) are known in the prior art. Also known in the art are RFID events triggering a web application.

Consequently, there is a need for a solution whereby the above-mentioned issues are solved so that it becomes indeed possible to virtualise a real object whereby the virtual object has the properties and functionalities of the real object.

### Aims of the invention

The present invention aims to provide a method and system for translating real life objects into virtual objects inside a virtual world, where the virtual objects have a "realistic" appearance and inherit real functionality and services.

### Summary

The invention aims at associating with a real life object a virtual object inside a virtual world. More in particular, the present invention relates to a method for creating a virtual object from a real object. The method comprises the steps of :
- obtaining information on at least one feature of the real object to be virtualised,
- translating the information on the at least one feature, and
- building a three-dimensional virtual model of the real object using the translated information.

The above solution indeed achieves the aim of the invention. The method of the invention exploits semantic information available on the real object. By performing a step of translating said information on one or more features of the real object, the information can be brought into a format suitable for use in building the virtual model. Translating the semantic information comprises in a typical embodiment interpreting the semantic information before bringing it into an suitable format.

In a preferred embodiment the method comprises the further step of injecting the virtual model as a virtual object in a virtual world.

In an advantageous embodiment the method comprises a step of obtaining information on the identity of the real object to be virtualised. The information on the at least one feature is derived from a database using the information on the identity of the real object. Short range communication can then be used for obtaining the information on the identity of the real object. The short range communication is advantageously radio-frequency identification.

In another preferred embodiment the method steps are performed in real-time.

In an advantageous embodiment the obtained information is in Resource Description format or in Web Ontology Language and is translated into a data format of the group {VRML, X3D, U3D, 03D, COLLADA, 3DMLW }.

In another aspect the invention relates to a system for creating a virtual object from a real object, said system comprising :
means for obtaining information on at least one feature of the real object to be virtualised and for translating the information,
- means for building a three-dimensional virtual model of the real object based on the translated information.

In an embodiment the system further comprises means for injecting the three-dimensional model into a virtual world.

The system preferably comprises storage means for storing said information on said at least one feature.

Advantageously the means for building is also arranged for visualising the three-dimensional model.

In an embodiment the system is located at an operator's premises.

In a preferred embodiment the system is implemented as a single device.

### Brief Description of the Drawings

Fig. 1 illustrates examples of semantic information for a TV set.

Fig. 2 illustrates examples of semantic information for a mobile phone.

Fig. 3 represents the architecture of a system for creating a virtual object according to an embodiment of the invention.

Fig. 4 represents the various steps of a method for creating a virtual object according to an embodiment of the invention.

### Detailed Description of the Invention

The present invention aims to create a virtual object from a real object by a simple and intuitive touch. This virtual object does not only have the similar appearance as the real one, but also inherits the attributes and intelligence of the real object.

Short range wireless technology, preferably RFID technology, can be applied to realize a tangible interaction. The basic idea of this invention is to provide a system and method (service) capable of parsing semantic information associated with a physical object (possibly via RF identification) and translating the parsed semantic information, realizing an intelligent virtual 3D model of the object based on the resulting parsed and translated semantic information and finally injecting the 3D model into a virtual world, e.g. Second Life, Wonderland, etc. Various features of the real object constitute the semantic information. The semantic information also expresses the intelligence of the real device.

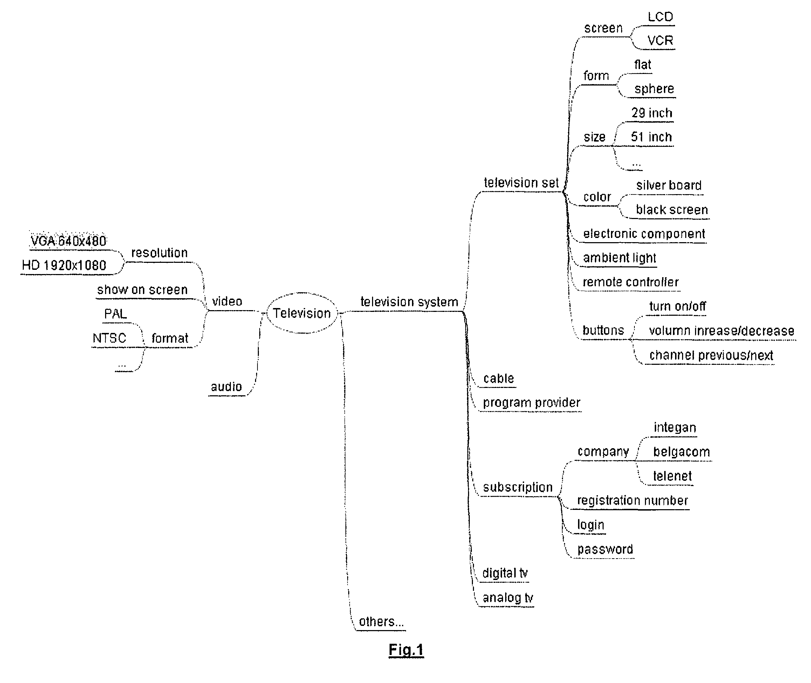

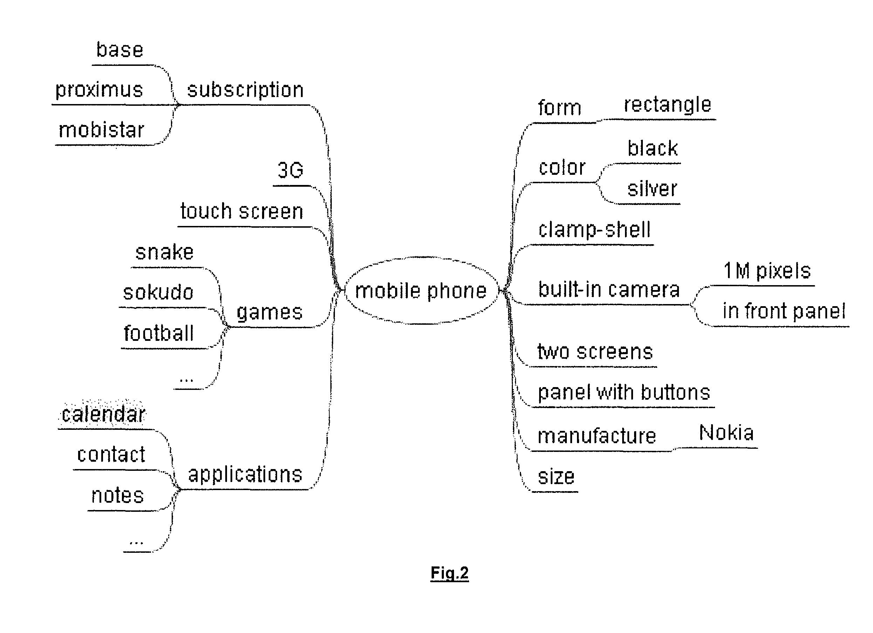

An example of semantic information of a television is shown in Fig.1. It contains for instance, design information (e.g. size, form, colour, etc...), functionalities (e.g. video, audio, etc...), operation information (e.g. subscription etc...), technical details, etc... Fig.2 gives a similar example of semantics of a mobile phone.

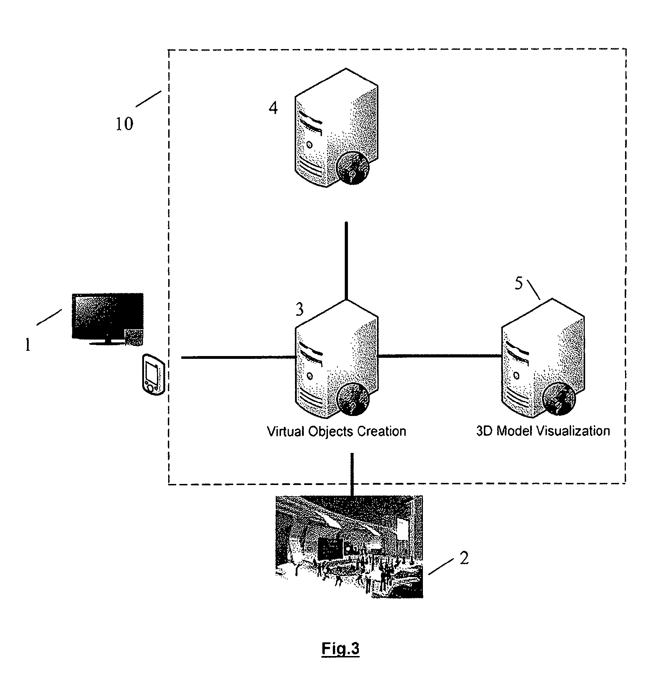

Details are now provided on architectural aspects of a system for creating a virtual object (2) from a real object (1) according to the present invention. Reference is made to Fig.3.

The real object (1) is preferably arranged for short-range communication (e.g. via RFID), which allows extracting information on the object's identity. When a real object provided with RFID is in proximity of a RFID reader device, the RFID identity is detected and sent to a virtual object creation module. The RFID identity is a unique number associated to an object. The identity information is used for accessing the appropriate part of a semantics correlation database wherein relation tables are stored allowing to link the RFID (identity) to semantic information of the real object with that identity. The semantic information can be stored in a format of Resource Description Framework (RDF), Web Ontology Language (OWL) or any other suitable format. Next, the virtual object creation block interprets semantic information on the real object. In that way the virtual object creation block can query an object's semantic information optionally based on a RFID input. The virtual object creation block not only interprets, but also translates semantic information into a data format (e.g. VRML, X3D, U3D, 03D, COLLADA, 3DMLW, etc...) that is understandable for the 3D Model visualization block to create a 3D model. VRML (Virtual Reality Modelling Language - before 1995 - known as the Virtual Reality Markup Language) is a standard file format for representing 3D interactive vector graphics, designed particularly with the World Wide Web in mind. It has been superseded by X3D. X3D is the ISO standard XML-based file format for representing 3D computer graphics, the successor to the VRML. X3D features extensions to VRML (e.g. Humanoid Animation, NURBS, GeoVRML etc.), the ability to encode the scene using an XML syntax as well as the Open Inventor-like syntax of VRML97, and enhanced application programming interfaces (APIs).

In the example of Fig.2 design information, colour, form, screen, size, etc. are shown as semantic information. This design information can be used by the 3D model visualization block to create a 3D model, which looks like the real object. On the left side of Fig.2 many functions are shown that a mobile phone offers. For instance there is a sudoku game, which can be implemented and attached to the 3D model. As such the created 3D model also inherits some (or even the whole) functionality and intelligence of the real object.

The system (10) for creating a virtual object from a physical object according to this invention, basically comprises the following functional blocks.
- means (3) for interpreting and translating semantic information on the real object (i.e. information on at least one feature of the real object) in a format of RDF, OWL, or any other suitable format into a 3D computer graphics representation in the format of VRML, X3D, U3D, 03D, COLLADA, 3DMLW, etc... In Fig.3 these features are shown as a virtual object creation (VOC) block (3). This block can be seen as the key component of the system of the invention. Preferably it is also arranged for receiving information on the identity of the real object to be virtualised. In one embodiment this identity information is used in a database (4) containing semantic information to find semantic information associated to the object with that RFID identity. The database (4) in such case typically comprises semantic information about a plurality of real objects.
- means (5) for building a three-dimensional model based on a 3D computer graphics representation file created from the VOC block. The file is created taking into account the interpretation of the semantic information in the VOC block. This building means is shown as '3D visualization means' in Fig.3.
- means for injecting said 3D model into a virtual world. Advantageously, this functional block is integrated in the VOC block (3).
Optionally, the system may comprise an additional device for reading identity information from the real object can be provided, e.g. RFID reader device.

RFID technology can be easily replaced by other technologies like Bluetooth/WiFi, semipedia, etc...

The functional blocks described above can be either located locally or on the network side. Also a distributed solution with some functional blocks locally and other centrally, can be envisaged.

The functionalities can be re-allocated to different functional blocks depending on the targeted applications.

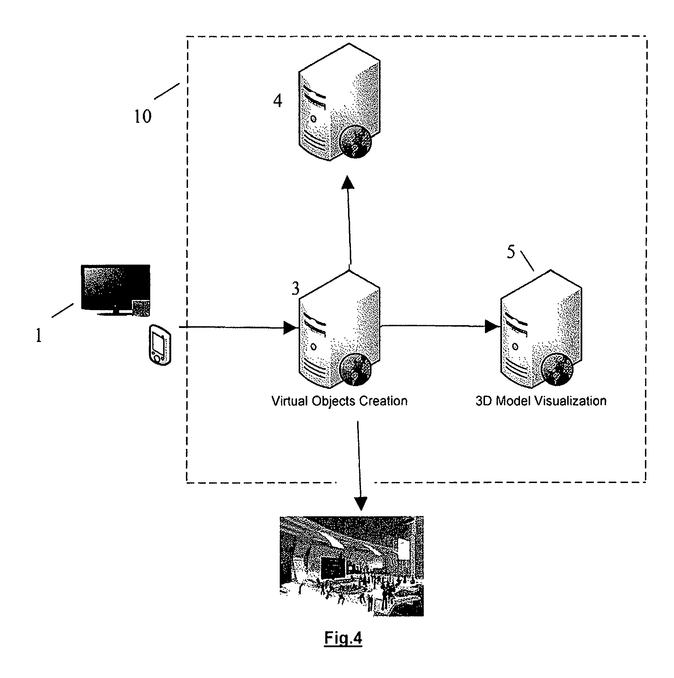

It is now explained how touching a TV set with a mobile phone results in a virtual, but fully functional, TV set appearing in a virtual world. When a physical object provided with means for RF identification or adapted for other short-range communication protocols (in this example a TV set with RFID is considered) gets in connection with a communication device arranged for reading data on the physical object, the RFID identification is sent to the VOC block via the reader device. In one embodiment the VOC resolves the received RFID identification into an URI. A Uniform Resource Identifier (URI) Identifies or names a resource using a string of characters. In terms of RFID technology, a URI is the decoded data on a RFID tag that identifies the asset the tag is attached to. The VOC queries the semantic information database for the relevant semantics information of the physical object based on the RFID identification. Then the VOC translates the semantics into 3D modelling information and sends it to the 3D visualisation means for 3D model creation. Afterwards, the VOC creates intelligence from the semantics and associates it to the 3D model of the TV. For instance, the front panel of the 3D model is associated with a TV channel. When the virtual turn-on button is pushed, a real TV show will be displayed on the virtual TV screen. Finally the VOC injects the 3D model of the TV into a virtual world, e.g. second life, wonderland, etc. The message flow is shown in Fig.4.

More scenarios or applications are possible. The invention for example allows transforming a real telephone set (or mobile phone) into a virtual one, which can be used to carry out a phone call as well. Another option can be to transform a MP3 player into a virtual one, which can be used to play music as well.

A specific example is now described more in detail, whereby a real MP3 player is transformed into a virtual one, which is capable of playing music as well. Once an RFID enabled MP3 player is in the proximity of a RFID reader device, the RFID reader device detects the identity of the MP3 player and sends it to the VOC. The VOC block relays the identity of the MP3 player to the database, where the identity is interpreted into semantic information of the MP3 player that subsequently is sent back to the VOC. This semantic information contains design information, e.g. the size, the form, the colour of the MP3 player, the screen location/size of the MP3 player, etc., which can be used to create a 3D model. The semantic information also comprises the functionalities information of the MP3 player, e.g. play, fast forward, rewind, next, previous, record, etc., which will be transplanted to the created 3D model. After the VOC block interprets the semantic information of the MP3 player, it sends the design and design relevant information to the 3D visualisation means to create a 3D model of the MP3 player. Then the VOC block creates intelligence based on functionality information and associates it to the created 3D model of the MP3 player. In that way the created 3D model of the MP3 player inherits the functionality of its counterpart in the real world and is able to, for instance, play music too. Then the VOC block injects the created 3D model of the MP3 player into a virtual world.

The system is capable of generating an intelligent virtual object. The whole procedure is autonomous. Existing services, e.g. SIP call, can be seamlessly plugged into this invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for creating a virtual object (2) from a real object (1), the method comprising the steps of :
- obtaining information on at least one feature of said real object to be virtualised,
- translating said information on said at least one feature, and
- building a three-dimensional virtual model of said real object using the translated information.

2. Method for creating a virtual object as in claim 1, further comprising the step of injecting said virtual model as a virtual object in a virtual world.

3. Method for creating a virtual object as in claim 1 or 2, wherein said step of translating comprises interpreting said information.

4. Method for creating a virtual object as in any of claims 1 to 3, comprising a step of obtaining information on the identity of said real object to be virtualised.

5. Method for creating a virtual object as in claim 4, wherein said information on said at least one feature is derived from a database using said information on the identity of said real object.

6. Method for creating a virtual object as in claim 4 or 5, wherein short range communication is used for obtaining said information on the identity of said real object.

7. Method for creating a virtual object as in claim 6, wherein said short range communication is radio-frequency identification.

8. Method for creating a virtual object as in any of the previous claims, wherein the method steps are performed in real-time.

9. Method for creating a virtual object as in any of the previous claims, wherein said obtained information is in Resource Description format or in Web Ontology Language and is translated into a data format of a group of data formats comprising {VRML, X3D, U3D, 03D, COLLADA, 3DMLW }.

10. System (10) for creating a virtual object (2) from a real object (1), said system comprising :
- means (3) for obtaining information on at least one feature of said real object to be virtualised and for translating said information,
- means (5) for building a three-dimensional virtual model of said real object based on the translated information.

11. System for creating a virtual object as in claim 10, further comprising means for injecting said three-dimensional model into a virtual world.

12. System for creating a virtual object as in any of claims 10 or 11, further comprising storage means (4) for storing said information on said at least one feature.

13. System for creating a virtual object as in any of claims 10 to 12, wherein said means (5) for building are arranged for visualising said three-dimensional model.

14. System for creating a virtual object as in any of claims 10 to 13, located at an operator's premises.

15. System for creating a virtual object as in any of claims 10 to 14, implemented as a single device.
